# EUROPÄISCHE PATENTANMELDUNG

(11) **EP 3 703 322 A1**
(43) Veröffentlichungstag der Anmeldung: **02.09.2020**
(21) Anmeldenummer: 19159716.0
(22) Anmeldetag: 27.02.2019
(51) Int. Cl.: H04L 12/851, H04L 12/841, H04L 29/06, H04L 9/32

(54) **VERFAHREN ZUR DATENÜBERTRAGUNG, GERÄT, COMPUTERPROGRAMM UND COMPUTERLESBARES MEDIUM**

(71) Anmelder: Siemens Aktiengesellschaft, 80333 München (DE)
(72) Erfinder: Chen, Feng, 90537 Feucht (DE); Götz, Franz-Josef, 91180 Heideck (DE); Kießling, Marcel, 91235 Velden (DE); Nguyen, An Ninh, 90427 Nürnberg (DE); Schmitt, Jürgen, 90766 Fürth (DE)

(57) **Zusammenfassung**

Die Erfindung betrifft ein Verfahren zur Datenübertragung in einem insbesondere industriellen Netzwerk (1), bei dem wenigstens eine geschützte Verbindung (V) für die Übertragung von Datenpaketen zwischen einem Stream-Initiator (T) und wenigstens einem Stream-Teilnehmer (L) eingerichtet wird, wobei ein Weiterleite-Kenner (SDA, SDA2), anhand dem die Weiterleitung von Datenpaketen über die wenigstens eine geschützte Verbindung (V) zu erfolgen hat, bereitzustellen ist, oder mehrere Weiterleite-Kenner (SDA), anhand derer jeweils die Weiterleitung von Datenpaketen über eine Teilstrecke der wenigstens einen geschützten Verbindung (V) zu erfolgen hat, bereitzustellen sind, wobei der oder wenigstens einer der Weiterleite-Kenner (SDA, SDA2) lokal von dem Stream-Initiator (T) und/oder lokal von einem Router (5) des Netzwerkes (1) generiert wird. Darüber hinaus betrifft die Erfindung ein Gerät zur Durchführung eines solchen Verfahrens, ein Computerprogramm und ein computerlesbares Medium.

## Beschreibung

Die Erfindung betrifft ein Verfahren zur Datenübertragung in einem insbesondere industriellen Netzwerk, bei dem wenigstens eine geschützte Verbindung für die Übertragung von Datenpaketen zwischen einem Stream-Initiator und wenigstens einem Stream-Teilnehmer eingerichtet wird, wobei ein Weiterleite-Kenner, anhand dem die Weiterleitung von Datenpaketen über die wenigstens eine geschützte Verbindung zu erfolgen hat, bereitzustellen ist, oder mehrere Weiterleite-Kenner, anhand derer jeweils die Weiterleitung von Datenpaketen über eine Teilstrecke der wenigstens einen geschützten Verbindung zu erfolgen hat, bereitzustellen sind. Darüber hinaus betrifft die Erfindung ein Gerät zur Durchführung eines solchen Verfahrens, ein Computerprogramm und ein computerlesbares Medium.

In der IEEE sind durch die Erweiterungen der Arbeitsgruppe TSN (Time-Sensitive Networking) periodische bzw. zyklische Übertragungen, so genannte Streams, im Netzwerk besonders geschützt. Die TSN-Arbeitsgruppe (Time Sensitive Networking Taskgroup) ist dabei eine Nachfolgegruppe der AVB-Arbeitsgruppe (Audio/Video Bridging Taskgroup). Zu TSN gehört eine Vielzahl von Standards, rein beispielhaft sei in diesem Zusammenhang genannt Zeitsynchronisation (IEEE 802.1 AS-REV), Framepreemption (IEEE 802.1 Qbu) und Reservierung (IEEE 802.1 Qca, IEEE 802.1 Qcc). Bekannt ist auch das Stream Reservation Protocol (SRP, siehe insbesondere IEEE 802.1 Qat), mit dem Übertragungsressourcen dynamisch reserviert werden können und es möglich wird, Latenzzeiten zu garantieren. Durch eine automatische Konfiguration von SRP kann für Streams mit einer erfolgreichen Reservierung insbesondere eine gesicherte Übertragung innerhalb einer bestimmten Maximalen Latenz garantiert werden.

Ein Sender wird im Rahmen von AVB bzw. TSN auch als Talker und ein Empfänger als Listener bezeichnet.

In Ethernet Netzwerken erfolgt die Weiterleitung von Frames anhand der sogenannten Destination MAC (Media Access Control) Adresse.

Um in Netzwerken mit Erweiterungen gemäß AVB und TSN für Streams die Weiterleitung schützen zu können und im Fehlerfall, insbesondere bei nicht ausreichenden lokalen Ressourcen, gezielt Anmeldungen ablehnen zu können, wird eine eigene Stream Destination MAC Adresse (SDA) für jeden Stream verwendet. Bei diesen SDA handelt es sich um eine Adresse, welche keine Station kennzeichnet (Stationsadresse), sondern nur für die Datenübertragung von Daten des einen Streams verwendet wird. Durch die eindeutige Adresse pro Stream wird die Reservierung im Netzwerk erst möglich, da bei einer Ablehnung die Weiterleitung der zu dem Stream gehörenden Daten gezielt blockiert werden kann. Durch das Reservierungsprotokoll wird die Weiterleitung (Information über zu verwendende Zielports) kontrolliert und Stream Daten werden nur über Ports mit einer gültigen Stream Reservierung an die Listener weitergeleitet.

Bei der Verwendung einer Stationsadresse der beteiligten Endgeräte (Talker oder Listener MAC Adressen) als Stream Adresse würde die Weiterleitung von allen anderen Daten im Netzwerk an die beiden Geräte nicht mehr funktionieren. SRP blockiert die Datenübertragung für die Adresse überall im Netzwerk, und schaltet diese erst nach einer erfolgreichen Anmeldung eines Listeners gezielt auf dem Weg zwischen Talker und Listener frei.

Die SDA muss also netzwerkweit eindeutig sein und es darf keine Stationsadresse verwendet werden, da die Station sonst bei einer fehlerhaften Reservierung nicht mehr erreichbar ist.

In AVB wurde die Streamadresse (SDA) im Reservierungsprotokoll als Parameter von der Endanwendung übergeben. Dadurch hat SRP immer mit einer zuvor definierten Adresse gearbeitet. Im SRP Protokoll ist die Überprüfung der Gültigkeit der Adresse vorgesehen. Dazu wird jeder Stream mit einer Stream ID im Netzwerk bekanntgegeben. Die Anmeldung erfolgt ebenfalls anhand dieser Stream ID. Die Stream ID setzt sich bevorzugt aus einer lokalen ID des Talkers und dessen Stationsadresse zusammen. So ist eine einfache lokale Erzeugung einer eindeutigen Stream ID möglich. Die Stationsadresse stellt die weltweite Eindeutigkeit sicher - durch die lokale ID können mehrere Streams pro Station im Netzwerk bekanntgegeben werden. Bei der Bekanntgabe des Streams wird geprüft ob die SDA schon verwendet wird. Falls ja, wird die Stream Bekanntgabe mit einem Fehlercode versehen und es sind keine Anmeldungen von Listenern an den Stream möglich (Talker Advertise wird zu einem Talker Failed). Falls nicht, wird die SDA lokal eingetragen und die Weiterleitung auf allen Zielports blockiert - damit schon ankommende Stream Daten nicht ungewollt im Netzwerk übertragen werden.

Bei AVB wurde das MAC Address Acquisition Protocol (MAAP, siehe insbesondere IEEE 1722) eingeführt, um eine Adresse im Netzwerk bekanntzugeben. Falls ein anderes Gerät diese Adresse schon benutzt, wird vom Netzwerk ein Fehler gemeldet und das Endgerät kann entscheiden, ob es versucht, eine neue Adresse im Netzwerk bekanntzugeben oder die Stream Anmeldung abbricht.

Durch das Mutiple MAC Registration Protocol (MMRP, siehe insbesondere IEEE 802.1ak) lassen sich Multicast Adressen im Netzwerk bekanntgeben und Stationen können sich als potentielle Empfänger registrieren. Durch die Registrierung bilden sich im Netzwerk Wege zu den registrierten Empfängern. Eine anschließ0ende Stream Bekanntgabe (etwa ein Talker Advertise) wird nur auf diesen zuvor gebildeten Wegen verteilt.

Bisher müssen die eindeutigen SDAs somit konfiguriert werden, wofür ein Protokoll, beispielsweise MAAP eingesetzt werden kann. Die SDAs müssen dem jeweiligen Talker bekannt geben werden, was mit einem nicht unerheblichen Aufwand verbunden ist.

Bei einem Layer 3 Übergang (IP) in einem Router geht die Layer 2 Information verloren. Bei der Datenweiterleitung wird eine neue Layer 2 Information verwendet. Bei einer Stream-übertragung stellt der Router dann praktisch einen Listener auf den Weg vom ursprünglichen Talker dar, und einen Talker für den Weg zum eigentlichen Listener des Streams aus Sicht des Layer 2 Netzwerkes.

An einem Router kann es erforderlich werden, für einen Stream eine neue SDA für das Layer 2 Netzwerk zu verwenden. Die Information über eine Verbindung von Layer 2 Segmenten ist bei AVB durch das Ressource Reservation Protocol (RSVP, siehe insbesondere den Request for Comments RFC 2205) vorgesehen.

Sind Router, von denen Layer2-Übergänge definiert werden, vorhanden, ist die Adresskonfiguration zusätzlich zu den Talkern auch bei den Routern erforderlich, um die neuen SDAs in dem dem Router folgenden Layer2-Netzwerk einzurichten. Auch hiermit kann ein nicht unbeachtlicher Aufwand einhergehen.

Ausgehend davon ist es eine Aufgabe der vorliegenden Erfindung, ein Verfahren der eingangs genannten Art anzugeben, welches sich mit gegenüber dem Stand der Technik reduzierten Aufwand durchführen lässt. Darüber hinaus ist es ein Aufgabe der vorliegenden Erfindung, ein Gerät anzugeben, mit dem sich ein solches Verfahren durchführen lässt.

Die erstgenannte Aufgabe wird bei einem Verfahren der eingangs genannten Art dadurch gelöst, dass der oder wenigstens einer der Weiterleite-Kenner lokal von dem Stream-Initiator und/oder lokal von einem Router des Netzwerkes generiert wird.

Die zeitgenannte Aufgabe wird gelöst durch ein Gerät zur Durchführung des erfindungsgemäßen Verfahrens, das dazu ausgebildet ist, wenigstens einen Weiterleite-Kenner, anhand dem die Weiterleitung von Datenpaketen zumindest über eine Teilstrecke der geschützten Verbindung zu erfolgen hat, lokal zu genieren. Bei dem erfindungsgemäßen Gerät handelt es sich bevorzugt um ein Endgerät, dass insbesondere einen Stream-Initiator darstellt, oder einen Router, der insbesondere einen Übergang von einem Layer2-Subnet zu einem weiteren Layer2-Subnetz bildet.

Die Idee der vorliegenden Erfindung besteht somit darin, eine lokale Generierung des Weiterleite-Kenners für geschützte Verbindungen vorzusehen. Eine Konfiguration und Bekanntgabe der Weiterleite-Kenner, wie sie gemäß dem Stand der Technik vorgesehen ist, kann so entfallen. Insbesondere wird kein Protokoll zur Konfiguration der Weiterleite-Kenner, insbesondere in Form von Stream-DAs benötigt. Dies ist auch besonders bei der Verwendung von Routern zur Übertragung von Echtzeitdaten hilfreich, da in Routern ein neuer Weiterleite-Kenner für die Streamdaten benötigt wird und so auf eine Konfiguration verzichtet werden kann. Die Layer2-Information ist somit auch unabhängig vom Layer3-Weg im Netzwerk, da nicht an jedem Router für jede geschützte Verbindung ein Weiterleite-Kenner konfiguriert werden muss, sondern dieser lokal generiert werden kann bzw. generiert wird.

Das erfindungsgemäße Verfahren lässt sich im Ergebnis mit gegenüber dem Stand der Technik deutlich reduzierten Aufwand durchführen. Dabei bietet es gleichzeitig die mit der Nutzung von geschützten Verbindungen verbundenen erheblichen Vorteile, etwa die insbesondere für eine Echtzeit-Übertragung wichtige garantierte Latenz.

Bei den Weiterleite-Kennern für geschützte Verbindungen, die erfindungsgemäß lokal im Endgerät und/oder Router generiert werden, handelt es sich bevorzugt um Stream Destination Addresses (SDAs). Bevorzugt generiert dasjenige Endgerät, welches den Stream-Initiator der geschützten Verbindung darstellt, lokal einen (ggf. ersten) Weiterleite-Kenner für diese. Alternativ oder zusätzliche erfolgt eine lokale Generierung eines Weiterleite-Kenners durch einen oder mehrere Router des Netzwerkes.

Ein Beispiel einer geschützten Verbindung ist ein Stream, wie er von der Audio/Video Bridging (AVB) Task Group und insbesondere von der Time-Sensitive Networking (TSN) Task Group in der internationalen Norm IEEE 802.1 festgelegt ist. Ein Stream kann zwischen genau einem Sender (Talker) und genau einem Empfänger (Listener) eingerichtet sein. Es ist auch bekannt, einen Stream zwischen einem einzelnen Talker und mehreren Listenern einzurichten. Dies entspricht dem Standard-Prinzip, wie es von der AVB Task Group und insbesondere von der TSN Task Group in der Norm IEEE 802.1 festgelegt ist. Darüber hinaus ist es auch möglich, einen Stream zwischen mehreren Talkern und einem einzelnen Listener einzurichten, wie es insbesondere in der ebenfalls auf die Anmelderin zurückgehenden europäischen Patentanmeldung mit der Anmeldenummer 18154319.0 beschrieben ist. Aus dieser geht auch eine Erweiterung eines Reservierungsprotokolls für eine automatische Konfiguration für ein solches hervor. In beiden 1:n-Szenarien, also sowohl demjenigen mit einem Talker und mehreren Listenern als auch demjenigen mit mehreren Talkern und einem Listener, wird der Stream jeweils von dem einzelnen des 1:n-Szenarios also entweder dem einen Talker oder dem einen Listener angekündigt und somit initiiert. Ein Gerät, das einen Stream ankündigt/initiiert wird vorliegend auch als Stream-Initiator bezeichnet und die mehreren weiteren Geräte, die sich an einem angekündigten Stream anmelden können, als Stream-Teilnehmer.

Eine geschützte Verbindung zeichnet sich zweckmäßiger Weise durch einen dieser zugeordneten eindeutigen Verbindungs-Kenner bevorzugt in Form einer Stream-ID aus. Über Verbindungs-Kenner können verschiedene geschützte Verbindungen, insbesondere Streams voneinander unterschieden werden.

Von dem Stream-Initiator kann für die Einrichtung der (jeweiligen) geschützten Verbindung wenigstens eine Ankündigungsnachricht gesendet werden, die im Netzwerk verteilt wird. Dies entspricht der aus dem Stand der Technik bzw. den AVBsowie TSN-Standard vorbekannten Vorgehensweise, dass für einen Stream zunächst eine Ankündigungsnachricht mit einer Stream-Beschreibung, beispielsweise ein sogenannter Talker Advertise (siehe IEEE 802.1), herausgegeben und im Netzwerk verteilt wird. Die wenigstens eine Ankündigungsnachricht für die (jeweilige) geschützte Verbindung umfasst dann bevorzugt einen dieser zugeordneten eindeutigen Verbindungs-Kenner, der bevorzugt die MAC-Adresse des Initiators und eine lokale Nummer umfasst und insbesondere durch eine Stream-ID gegeben ist.

Bevorzugt wird von den Stream-Initiator eine Ankündigungsnachricht für die wenigstens eine geschützte Verbindung gesendete, welche einen lokal von diesem generierten Weiterleite-Kenner umfasst.

Die Einrichtung der geschützten Verbindungen umfasst weiterhin bevorzugt die Reservierung von Netzwerkressourcen an beteiligten Netzwerkknoten. Die Reservierung kann unter Verwendung eines Reservierungsprotokolls erfolgen. Dies entspricht dem aus dem Stand der Technik vorbekannten Prinzip, wie es insbesondere von der AVB Task Group und insbesondere von der TSN Task Group in der Norm IEEE 802.1 festgelegt ist.

Bei Netzwerkknoten kann es sich in hinlänglich bekannter Weise z.B. um Bridges oder Switches oder Router handeln.

Selbstverständlich können in einem Netzwerk mehrere geschützte Verbindungen eingerichtet werden bzw. sein. Ist dies der Fall, wird bevorzugt für mehrere, insbesondere sämtliche geschützte Verbindungen wenigstens ein Weiterleite-Kenner, insbesondere wenigstens eine Stream-DA auf die erfindungsgemäße Weise lokal von dem Stream-Initiator, insbesondere einem diesen bildenden Endgerät, und/oder von einem Router generiert.

Als besonders geeignet hat sich das erfindungsgemäße Verfahren für die Datenübertragung in einem industriellen Automatisierungsnetzwerk, etwa einer Automatisierungsanlage erwiesen. Über eine oder auch mehrere geschützte Verbindung(en), für die (jeweils) wenigstens ein Weiterleite-Kenner erfindungsgemäß lokal generiert wird bzw. wurde, können dann insbesondere von Sensoren erfasste Messdaten an eine Steuerung der Anlage übertragen werden und/oder von einer Steuerung ermittelte Stellwerte an Aktoren einer Anlage.

Eine bevorzugte Ausführungsform des erfindungsgemäßen Verfahrens zeichnet sich ferner dadurch aus, dass der oder wenigstens einer der Weiterleite-Kenner unter Rückgriff auf einen der geschützten Verbindung zugeordneten eindeutigen Verbindungs-Kenner generiert wird. Die Generierung kann beispielsweise unter Rückgriff auf eine der geschützten Verbindung zugeordnete Stream-ID erfolgen. Das erfindungsgemäße Gerät ist in vorteilhafter Weiterbildung entsprechenden ausgebildet und/oder eingerichtet. Dann wird besonders bevorzugt der oder wenigstens einer der Weiterleite-Kenner von dem Stream-Initiator oder Router generiert, indem mittels einer Hashfunktion ein Hash-Wert aus dem Verbindungs-Kenner berechnet und dieser bevorzugt um eines oder mehrere Bits, insbesondre eine vorgegebene Bitfolge erweitert wird.

Das erfindungsgemäße Gerät ist in vorteilhafter Weiterbildung entsprechenden ausgebildet und/oder eingerichtet.

Alternativ oder zusätzlich kann vorgesehen sein, dass der oder wenigstens einer der Weiterleite-Kenner unter Rückgriff auf einen dem Stream-Initiator oder dem Router zugeordneten eindeutigen Geräte-Kenner, insbesondere unter Rückgriff auf eine dem Stream-Initiator oder Router zugeordnete MAC-Adresse generiert wird.

Dann wird besonders bevorzugt der oder wenigstens einer der Weiterleite-Kenner generiert, indem mittels einer Hashfunktion ein Hash-Wert aus dem dem Stream-Initiator oder Router zugeordneten Geräte-Kenner oder aus einer Bitfolge, die den Geräte-Kenner und eines oder mehrere weitere Bits umfasst, berechnet und dieser bevorzugt um eines oder mehrere Bits, insbesondere eine vorgegebene Bitfolge erweitert wird.

Alternativ zu einer MAC-Adresse kann auch eine UUID (Universally Unique Identifier) verwendet werden. Diese ist ebenfalls eindeutig und daraus kann ein Hashwert, beispielsweise ein 32-bit CRC verwendet werden.

Das erfindungsgemäße Gerät ist in vorteilhafter Weiterbildung entsprechenden ausgebildet und/oder eingerichtet.

Als Beispiele für einen geeignete Hashfunktion für die lokale Weiterleite-Kenner-Generierung sei eine Funktion oder ein Algorithmus für eine zyklische Redundanzprüfung (CRC), insbesondere der CRC32-Algorithmus, oder ein Message-Digest-Algorithmus (MDA) oder ein Secure-Hash-Algorithmus (SHA) oder der Adler-32-Algortihmus oder der Fletcher-Algorithmus genannt.

Beispiele für Message Digest Algorithmen sind MD1, MD2, MD3, MD4, MD5, usw. Der MD5 Message-Digest-Algorithmus beispielsweise ist in RFC 1321 beschrieben. Secure Hash Algorithmus (SHA) bezeichnet eine Gruppe standardisierter Hashfunktionen. Beispiele für Secure Hash Algorithmen sind SHA1, SHA2, SH3, SHA4, SHA5, usw. Der Secure Hash Algorithmus 1 (SHA1) etwa ist in RFC 3174 beschrieben. Der Fletcher-Algorithmus ist auch unter Bezeichnung "Fletchers Prüfsumme" bzw. "Fletcher's Checksum" bekannt. Der Adler-32-Algorithmus ist u.a. in RFC 1950 beschrieben.

Es hat sich als besonders geeignet erwiesen, einen eindeutigen Verbindungs-Kenner bevorzugt in Form einer Stream-ID oder auch einen eindeutigen Geräte-Kenner (ggf. um eines oder mehrere Bits erweitert) heranzuziehen und daraus lokal einen Weiterleite-Kenner zu berechnen. Die Berechnung kann besonders vorteilhaft über eine Hash-Funktion bzw. einen Hash-Algorithmus erfolgen.

Berechnungen über Hash-Funktionen bzw. -Algorithmen sind auch in Embedded-Geräten machbar. Sie werden gemäß dem Stand der Technik oftmals bereits zur Fehlererkennung von Datenpaketen verwendet und sind einfach zu implementieren, vielfach bereits vorhanden.

Das Ziel der maximalen Streuung des Hash-, beispielsweise CRC-Wertes (Änderung von 1 Bit soll erkannt werden) ist für die Generierung von Weiterleite-Kennern insbesondere in Form von MAC-Adressen gut einsetzbar.

Unter einer Hash-Funktion ist insbesondere in an sich bekannter Weise eine Funktion zu verstehen, die eine größere Eingabemenge auf eine kleinere Zielmenge abbildet, wobei zumindest die Zielmenge in der Regel Elemente enthält, die sich durch eine feste Länge auszeichnen. Über die Anwendung einer Hash-Funktion auf den Verbindungs- bzw. ggf. erweiterten Geräte-Kenner erhält man einen Hashwert bevorzugt vorgegebener Größe, beispielsweise einen 32-bit Wert, der als Weiterleite-Kenner bzw. bevorzugt Bestandteil eines solchen verwendet wird.

Über eine Hash-Funktion bzw. einen Hash-Algorithmus kann insbesondere ein gegenüber dem Eingangswert kürzerer bzw. kleinerer Ausgangswert erhalten werden. Dies ist besonders vorteilhaft, wenn ein Verbindungs-Kenner, etwa eine Stream-ID herangezogen wird, um den Weiterleite-Kenner lokal zu generieren, denn die Stream ID ist gemäß dem Stand der Technik üblicher Weise 8 Byte groß (Geräte-Kennung in Ethernet durch eine eindeutige MAC-Adresse von 6 Bytes und einer Erweiterung um 2 Byte für die Unterstützung von mehr als einem Stream pro Talker), wohingegen sich Weiterleite-Kenner in Ethernet Netzwerken durch eine Größe von 6 Byte (MAC Adresse) auszeichnen sollten.

Besonders bevorzugt wird dem über die Hash-Funktion erhaltenen Hashwert ein konstanter Anteil bzw. eine konstante Bitfolge hinzugefügt, bevorzugt vorangestellt, in welcher in vorteilhafter Ausgestaltung das Multicast-Bit gesetzt ist.

Durch Anwendung einer Hash-Funktion beispielsweise in Form eines CRC-Mechanismus und einer festen, vorgegebenen Bitfolge, also eines konstanten Bestandteils kann eine hohe Streuung der Adressen erreicht werden. Dies ist bei der Eintragung der Weiterleite-Kenner, insbesondere Adressen in den Knotenpunkten des Netzwerkes, etwa Bridges hilfreich, da diese oft einen Hash-Algorithmus verwenden, um ihre Weiterleite-Adressen in einer internen Tabelle zu verwalten.

Der wenigstens einen geschützten Verbindung ist oder wird als Verbindungs-Kenner bevorzugt die gegebenenfalls um eines oder mehrere Bits erweiterte MAC-Adresse oder auch die gegebenenfalls um eines oder mehrere Bits erweiterte UUID des Stream-Initiators zugeordnet. Diese entspricht der aus dem Stand der Technik vorbekannten, bewährten Struktur einer Stream-ID. Die MAC-Adresse des insbesondere durch ein Endgerät gegebenen Stream-Initiators, bei dem es sich um einen Talker oder auch Listener der wenigstens einen geschützten Verbindung handeln kann, ist in der Regel weltweit eindeutig. Die Initiator-MAC-Adresse ist bevorzugt um eine lokale Nummer (entsprechende Bitfolge) erweitert, was ermöglicht, dass mehrere geschützte Verbindungen pro Stream-Initiator eingerichtet werden können. Die lokale Nummer kann beispielsweise hochgezählt werden, wobei dann etwa für die erste geschützte Verbindung des den Stream-Initiators die Nummer 1 vergeben wird, für die zweite die Nummer 2 usw. Die lokale Nummer kann von dem Stream-Initiator lokal verwaltet werden. Alternativ zu einer MAC-Adresse kann auch eine UUID verwendet werden, die ebenfalls eindeutig ist.

Weiterhin kann vorgesehen sein, dass sich die wenigstens eine geschützte Verbindung über zwei oder mehr Subnetze, insbesondere Layer2-Subnetze des Netzwerkes, die oder von denen jeweils zwei über einen Router verbunden sind, erstreckt. Dann wird bevorzugt von dem oder wenigstens einem der zwei Subnetze verbindenden Router der oder wenigstens einer der Weiterleite-Kenner lokal generiert. Dieser kann dann die Übertragung der Datenpakete über eine sich an den Router anschließende Teilstrecke der wenigstens einen geschützten Verbindung verwendet werden. Diese Vorgehensweise hat sich als besonders geeignet erwiesen.

Erstreckt sich die wenigstens eine geschützte Verbindung über zwei oder mehr Layer2-Netzwerke, die (jeweils) über einen Router verbunden sind, geht die Layer2-Information bei dem (jeweiligen) Router verloren. In diesem Falle ist es besonders vorteilhaft, wenn der (jeweilige) Router alternativ oder zusätzlich zu dem Stream-Initiator einen (neuen) Weiterleite-Kenner auf die erfindungsgemäße Weise lokal generiert. So wird es möglich, den bisherigen Konfigurationsaufwand für Layer2-Übergänge - ggf. zusätzlich zu dem Konfigurationsaufwand für den Stream-Initiator - vollständig einzusparen.

Der oder wenigstens einer der zwei Subnetze verbindenden Router fügt dann bevorzugt den von ihm lokal generierten Weiterleite-Kenner Datenpakten, die er aus dem einen Subnetz empfängt und in das andere Subnetz weiterleitet, hinzu.

Alternativ oder zusätzlich kann vorgesehen sein, dass der oder wenigstens einer der zwei Subnetze verbindenden Router eine Ankündigungsnachricht für die wenigstens eine geschützte Verbindung sendet, welche einen lokal von dem Router generierten Weiterleite-Kenner umfasst.

Das erfindungsgemäße Gerät ist insbesondere für den Fall, dass es in Form eines Routers gegeben ist, in Weiterbildung entsprechend ausgebildet und/oder eingerichtet.

In weiterer vorteilhafter Ausgestaltung des Verfahrens ist vorgesehen, dass im Anschluss an die lokale Generierung des oder des wenigstens einen Weiterleite-Kenners überprüft wird, ob dieser in dem Netzwerk oder zumindest einem Subnetz dieses noch nicht verwendet wird.

Für den Fall, dass ein lokal generierter Weiterleite-Kenner bereits verwendet wird, wird dann bevorzugt ein Teil, insbesondere wenigstens ein Byte des lokal generierten Weiterleite-Kenners lokal verändert und die Überprüfung anschließend wiederholt. Eine Veränderung des Kenners im Kollisionsfall und anschließende erneute Überprüfung erfolgt zweckmäßiger Weise so oft, bis ein Weiterleite-Kenner generiert wurde, der noch nicht benutzt wird. Es kann beispielsweise ein konstanter Operator verwendet werden, etwa ein solcher, der bewirkt, dass das 1., 2., 3., ..., n-te Byte bei der 1., 2.,. 3., ..., n-ten wiederholten Versuch invertiert wird.

Das erfindungsgemäße Gerät kann sich entsprechend dadurch auszeichnen, dass es dazu ausgebildet und/oder eingerichtet ist, im Anschluss an die lokale Generierung des wenigstens einen Weiterleite-Kenners zu überprüfen, ob dieser in dem Netzwerk oder zumindest einem Subnetz dieses noch nicht verwendet wird und für den Fall, dass er bereits verwendet wird, bevorzugt einen Teil, insbesondere wenigstens ein Byte des generierten Weiterleite-Kenners zu verändern und die Überprüfung zu wiederholen.

Die Überprüfung, ob ein lokal generierter Weiterleite-Kenner gültig ist, was nicht der Fall ist, wenn er bereits im Netzwerk benutzt wird, kann insbesondere unter Verwendung eines Reservierungsprotokolls, etwa SRP erfolgen und/oder durch die Registrierung, etwa durch MMRP. Durch MMRP wird die Verwendung der Adressen allen anderen Netzwerkteilnehmern signalisiert. Dadurch kann die Verwendung der neu generierten SDA erkannt werden und eine neue SDA generiert werden. Bei SRP erfolgt eine Prüfung bei der Weitergabe der Stream Bekanntgabe (z. B. Talker Advertise) in jeder Netzwerkkomponente. Für bereits verwendete Adressen gibt es einen SRP standardisierten Failure Code, der in der Stream Bekanntgabe eingefügt wird. Durch eine zusätzliche Signalisierung vom Stream-Teilnehmer (z. B. Listener) zum Stream-Initiator (z. B. Talker) im Layer 2 Segment kann die Reservierung ggf. mit einer neuen SDA erneut versucht werden.

Ein weiterer Gegenstand der Erfindung ist ein Computerprogramm, das Programmcodemittel zur Durchführung der Schritte des erfindungsgemäßen Verfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin zeigt jeweils in rein schematischer Darstellung
- FIG 1: einen Teil eines industriellen Kommunikationsnetzwerkes einer Automatisierungsanlage;
- FIG 2: einen Verbindungs-Kenner in Form eines Stream-ID;
- FIG 3: einen Weiterleite-Kenner in Form einer Stream Destination MAC Adresse;
- FIG 4: den Talker aus FIG 1 in vergrößerter Darstellung und einen von diesem gesendeten Talker Advertise;
- FIG 5: den Talker aus FIG 1 und einen Router und die Ermittlung des Weiterleite-Kenners gemäß dem Stand der Technik;
- FIG 6: einen Teil eines weiteren industriellen Kommunikationsnetzwerkes einer Automatisierungsanlage;
- FIG 7: den Talker und den Router aus FIG 1 bzw. 5 und 6, die jeweils einen Weiterleite-Kenner in Form einer Stream Destination Address (SDA) lokal generieren; und
- FIG 8: die lokale Generierung eines Weiterleite-Kenners in Form einer Stream Destination Address (SDA) unter Rückgriff auf die Stream-ID.

Gleiche Elemente sind in den Figuren mit gleichen Bezugszeichen versehen.

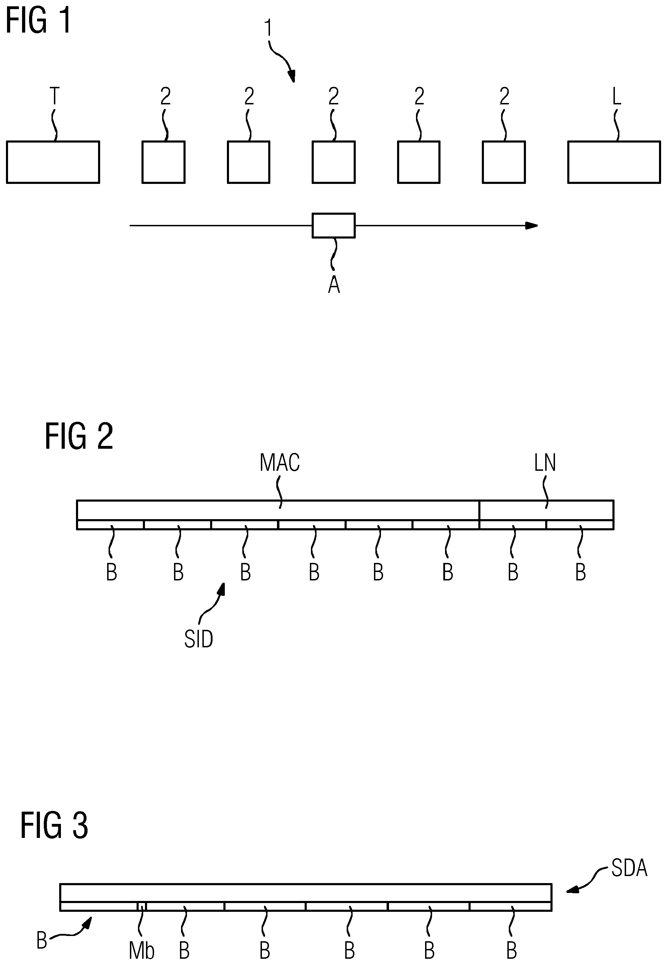

Die FIG 1 zeigt eine rein schematische Teildarstellung eines industriellen Kommunikationsnetzwerkes 1, welches der Datenkommunikation der Komponenten einer industriellen, technischen Anlage dient.

Von der Anlage sind in der FIG 1 nur insgesamt zwei Endgeräte T, L gezeigt. Bei diesen handelt es sich vorliegend um eine Steuerung T der Anlage, welche periodisch Steuerdaten an das weitere Endgerät L zu senden hat, das einen Aktor umfasst bzw. durch einen solchen gebildet ist. Der Aktor L wirkt, wenn er die Steuerdaten periodisch empfängt, in an sich bekannter Weise periodisch auf die Anlage bzw. einen in dieser ablaufenden Prozess ein. Die Datenübertragung zwischen der Steuerung T und dem Aktor L ist entsprechend im Rahmen einer bzw. für eine Anwendung, welche der Steuerung der Anlage dient, erforderlich.

Die Steuerung T, die einen Sender von Daten darstellt, ist ein Talker und der Aktor bzw. das diesen umfassende Endgerät L, das einen Empfänger der Daten darstellt, ist ein Listener.

Weiterhin in der FIG 1 gezeigt sind fünf Netzwerkknoten 2 in Form von Bridges, über welche die Steuerung T und das Endgerät L verbunden sind und Daten austauschen können.

Es sei angemerkt, dass die Anlage und das zugehörige Kommunikationsnetzwerk 1 weitere, in der Teildarstellung gemäß FIG 1 nicht erkennbare Komponenten, u.a. weitere Endgeräte T, L sowie Netzwerkknoten 2 umfassen kann bzw. umfasst.

Um einen gesicherte Übertragung der Steuerdaten in Echtzeit, insbesondere mit garantierter Latenz zu ermöglichen, wie es für einen reibungsfreien Betrieb der Anlage wesentlich ist, soll die periodische Datenübertragung über geschützte Verbindungen, vorliegend als TSN-Streams erfolgen.

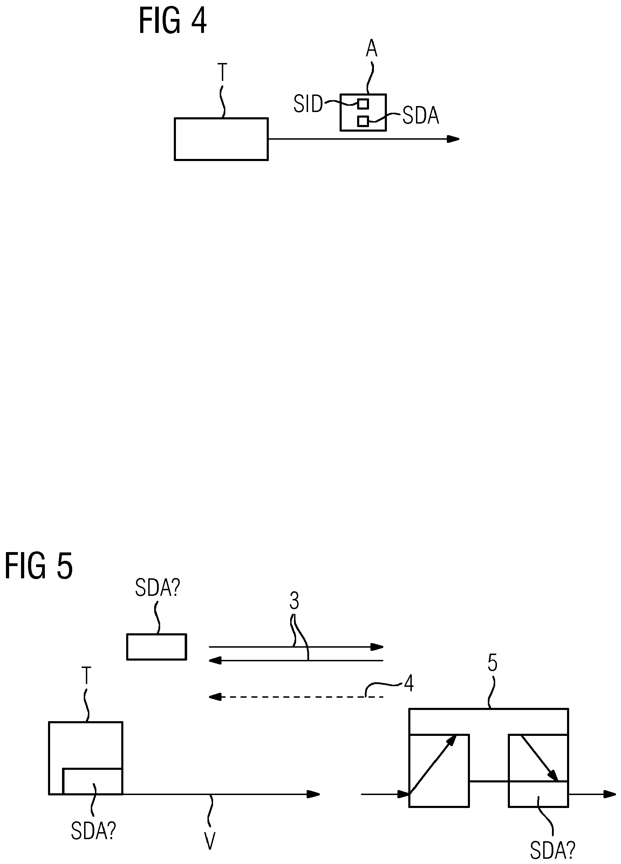

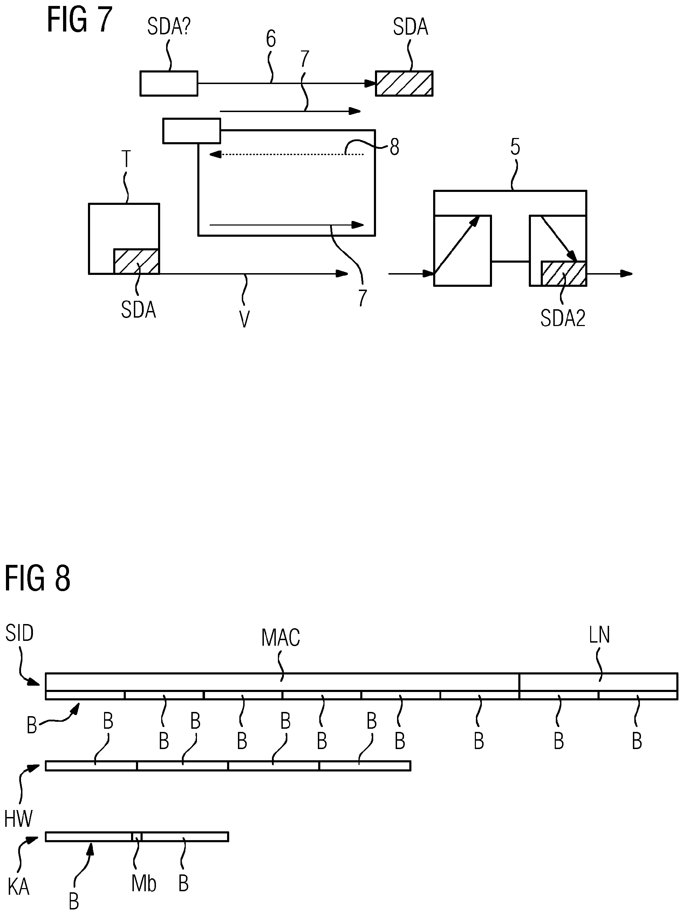

Aus dem Stand der Technik ist bekannt, dass hierzu zwischen dem Talker T und Listener L eine geschützte Verbindung, konkret ein TSN-Stream V (nur in den Figuren 5 und 7 dargestellt) eingerichtet wird, wobei in diesem Zusammenhang auf die zugehörigen Standards, insbesondere IEEE 802.1 verwiesen sei. Dabei wird der jeweilige Stream V zunächst von der den Stream-Initiator darstellenden Steuerung T angekündigt, wofür diese ein Ankündigungsnachricht, konkret einen Talker Advertise A mit einer Streambeschreibung für den Stream V herausgibt, die im Netzwerk 1 verteilt wird. Der Listener L meldet sich dann an einem dem Stream V an, indem er eine Teilnahmenachrichten in Form eines Listener Joins für den Stream V sendet, der an den Talker T zurück übertragen wird. An den beteiligten Netzwerkknoten 2 werden für den Stream V2 die verfügbaren Ressourcen, u.a. die verfügbare Bandbreite geprüft und reserviert, sofern sie verfügbar sind. Nach erfolgreicher Reservierung kann die Weiterleitung für den Stream V aktiviert werden und es werden zyklisch Stream-Datenpakete über den Streams V an den Listener L gesendet.

Jedem Stream V in einem Netzwerk ist ein Verbindungs-Kenner in Form einer Stream-ID zugeordnet, welche insbesondere in der Control-Plane für die Konfiguration bzw. Verwaltung genutzt wird. Eine Stream-ID SID ist rein schematisch in der FIG 2 gezeigt. Bei dem hier beschriebenen Ausführungsbeispiel umfasst diese die weltweit eindeutige Stationsadresse, konkret MAC-Adresse MAC des Talkers T und eine lokale Nummer LN. Die Stationsadresse MAC ist 6 Byte und die lokale Nummer LN zwei Byte lang. Die einzelnen Bytes B sind in der FIG 2 angedeutet.

Über die lokale Nummer LN wird es möglich, dass mehrere geschützte Verbindungen für die Steuerung T eingerichtet werden können, die über eine entsprechende Stream-ID alle eindeutig identifizierbar sind. Die lokale Nummer LN kann beispielsweise hochgezählt werden, etwa für die erste geschützte Verbindung V eins betragen und für etwaige weitere geschützte Verbindungen 2, 3, 4 usw. Die lokale Nummer kann von der Steuerung T verwaltet werden, welcher die geschützte(n) Verbindung(en) und deren Anzahl bekannt ist bzw. sind.

Es ist ferner jedem Stream V wenigstens ein Weiterleite-Kenner insbesondere in Form einer Adresse, konkret einer sogenannten Stream Destination MAC Address SDA zuzuordnen, welcher insbesondere auf der Data-Plane für die Weiterleitung der Pakete genutzt wird.

Ein solcher Weiterleite-Kenner ist rein schematisch in FIG 3 dargestellt. Es handelt sich bevorzugt um eine Layer2-Multicast-Adresse, die sich zweckmäßiger Weise durch eine Länge von 6 Byte auszeichnet.

Die Talker Advertise Nachricht A, die der Talker T sendet, um die geschützte Verbindung V anzukündigen, und die im Netzwerk verteilt wird, enthält zweckmäßiger Weise sowohl den Verbindungs-Kenner in Form der eindeutigen Stream-ID als auch zumindest einen Weiterleite-Kenner in Form einer Stream Destination MAC Adresse SDA. Dies ist rein schematisch in FIG 4 angedeutet, welche den Talker T in vergrößerter Darstellung zeigt und in der das Senden des die Stream-ID SID und die Stream Destination MAC Address SDA umfassende Talker Advertise Nachricht A angedeutet ist.

Gemäß dem Stand der Technik kommt für die Bestimmung von Weiterleite-Kennern in Form von Stream Destination MAC Adressen SDA ein Protokoll zum Einsatz. Dies ist schematisch in der FIG 5 dargestellt, welche u.a. den Talker T und die geschützte Verbindung V zeigt. Der Listener L ist hier nicht nochmal gezeigt. Der Talker T, der die geschützte Verbindung V ankündigen möchte, benötigt eine SDA für die Datenweiterleitung. Dies ist in der FIG 5 durch das mit "SDA?" bezeichnete Blockelement in dem Talker T angedeutet ist. Über ein Protokoll, wie etwa MAAP wird eine SDA ermittelt und konfiguriert. In der FIG 5 ist der Einsatz von MAAP durch die beiden mit der Bezugsziffer 3 versehenen gegenläufigen Pfeile angedeutet und die Konfiguration durch einen gestrichelten, mit der Bezugsziffer 4 versehenen Pfeil.

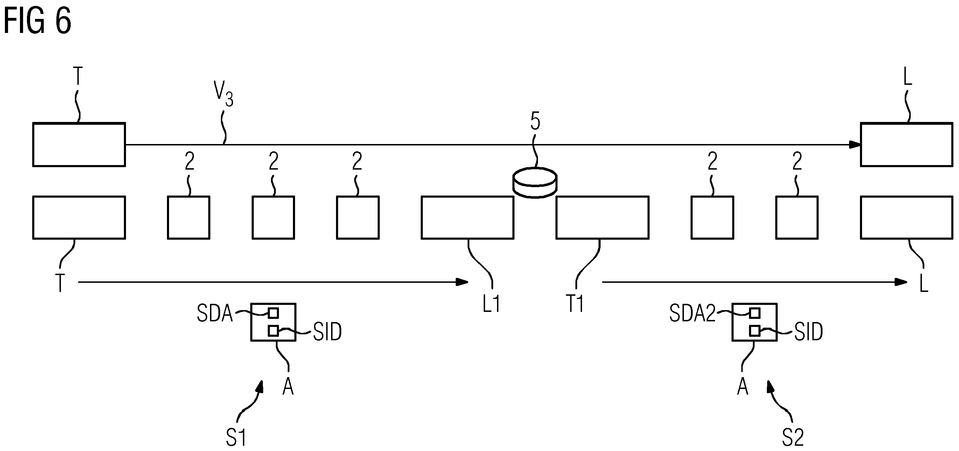

Die Verwendung des Protokolls und die Konfiguration sind mit nicht unerheblichem Aufwand verbunden. Der Aufwand erhöht sich noch weiter, wenn das Netzwerk einen oder mehrere Router 5 umfasst, der bzw. die jeweils zwei Layer2-Subnetze S1, S2 (siehe FIG 6) miteinander verbindet bzw. verbinden. In der FIG 5 ist ein Router 5 beispielhaft gezeigt.

Bei einem Layer 3 Übergang (IP) in einem Router 5 geht die Layer 2 Information verloren. Bei der Datenweiterleitung wird eine neue Layer 2 Information verwendet. Bei einer Streamübertragung der Router 5 hat dann praktisch die Rolle eines Listeners L1 auf den Weg vom ursprünglichen Talker T, und die Rolle eines Talkers T1 für den Weg zum eigentlichen Listener L des Streams V aus Sicht des Layer 2 Netzwerkes. Dies ist schematisch in der FIG 6 angedeutet. Es sei angemerkt, dass dem Router 5 zwar diese Rollen aus Sicht der beiden Subnetze S1, S2 zukommen, er jedoch kein tatsächlicher Listener bzw. Talker ist, da er keine Quelle bzw. Senke für Datenpakete darstellt, sondern diese nur weiterleitet. Weiterhin sein angemerkt, das in FIG 6 ganz oben der Layer 3 angedeutet ist, wobei ein mit dem Bezugszeichen V₃ versehener Pfeil den Layer3-Stream zwischen dem Talker T und Listener L andeutet.

Insbesondere an einem Router 5 kann es somit erforderlich werden, für einen Stream eine neue SDA für das zweite Layer 2 Netzwerk S2 zu verwenden. Dies ist in der FIG 5 rechts durch das mit SDA? Bezeichnete Blockelement in dem Router 5 angedeutet. Die Information über eine Verbindung von Layer 2 Segmenten ist bei AVB durch das Ressource Reservation Protocol (RSVP, siehe insbesondere den Request for Comments RFC 2205) vorgesehen.

Sind Router 5, von denen Layer2-Übergänge definiert werden, vorhanden, wie in FIG 5 und 6 dargestellt, ist somit die Adresskonfiguration zusätzlich zu dem bzw. den Talkern T auch bei den Routern 5 erforderlich, um die neuen SDAs in dem (jeweiligen) Router 5 folgenden Layer2-Netzwerk einzurichten. Im Ergebnis ist der Aufwand in einem solchen Falle besonders hoch.

Erfindungsgemäß wird der Problematik des vergleichsweise hohen Aufwandes durch die Adresskonfiguration begegnet mit einem Verfahren zur Datenübertragung in dem industriellen Netzwerk 1, bei dem wenigstens eine geschützte Verbindung V für die Übertragung von Datenpaketen zwischen dem T Stream-Initiator T und wenigstens einem Stream-Teilnehmer L eingerichtet wird, wobei ein Weiterleite-Kenner SDA, anhand dem die Weiterleitung von Datenpaketen über die wenigstens eine geschützte Verbindung V zu erfolgen hat, bereitzustellen ist, oder mehrere Weiterleite-Kenner SDA, anhand derer jeweils die Weiterleitung von Datenpaketen über eine Teilstrecke der wenigstens einen geschützten Verbindung V zu erfolgen hat, bereitzustellen sind, wobei der oder wenigstens einer der Weiterleite-Kenner SDA lokal von dem Stream-Initiator T oder lokal von einem Router 5 des Netzwerkes 1 generiert wird.

Konkret wird bei dem Szenario gemäß der FIG 1, bei dem zwischen dem durch die Steuerung gegebenen Talker T und dem durch das Endgerät mit einem Aktor gegebenen Listener L nur Netzwerkknoten 2 in Form von Bridges jedoch keine Router liegen, ein Weiterleite-Kenner für die geschützte Verbindung V lokal von dem Talker T generiert und dieser Weiterleite-Kenner für die Weiterleitung von Datenpaketen über die gesamte geschützte Verbindung vom Talker T zum Listener L verwendet.

Dabei wird eine Stream Destination MAC Adresse SDA als Weiterleite-Kenner generiert, wie er in FIG 3 schematisch dargestellt ist, und die lokale Generierung dieser erfolgt unter Rückgriff auf den der geschützten Verbindung V zugeordneten eindeutigen Verbindungs-Kenner, konkret der dieser zugeordneten Stream-ID SID, wie sie in FIG 2 dargestellt ist.

Um die Stream Destination MAC Adresse SDA für die Weiterleitung der Pakete zu erhalten, wird bei dem hier beschriebenen Ausführungsbeispiel mittels einer Hashfunktion ein Hash-Wert aus dem Verbindungs-Kenner, also der Stream-ID berechnet. Als Hash-Funktion kommt dabei ein Algorithmus für eine zyklische Redundanzprüfung, konkret der CRC-32-Algorithmus bzw. -Mechanismus zum Einsatz. Hierdurch wird aus der 8 Byte langen SID eine 4 Byte lange Bitfolge erhalten. Diese ist in der FIG 8 Mitte schematisch dargestellt. Darüber ist zum Vergleich nochmals die SID gemäß FIG 2 gezeigt, welche die 6 Byte große weltweit eindeutige MAC-Adresse des Talkers T und die 2 Byte große lokale Nummer LN umfasst.

Für die restlichen Werte des SDA wird ein konstanter Wert benutzt. Konkret wird dem erhaltenen 4-Byte-Hash-Wert HW ein 2 Byte langer konstanter Anteil KA vorangestellt, in dem das Multicast-Bit Mb gesetzt ist. Dieser Bestandteil ist in der FIG 8 unten schematisch dargestellt. Im Ergebnis wird eine 6 Byte lange Layer 2 Multicast Adresse erhalten, die als Stream Destination MAC Adresse genutzt werden kann und die in FIG 3 dargestellt ist.

Durch die Anwendung des CRC-Mechanismus und eines konstanten Bestandteils KA soll eine hohe Streuung des Adressen SDA erzielt werden. Dies ist bei der Eintragung der Adresse in den Bridges 2 hilfreich, da diese oft einen Hash-Algorithmus benutzten, um ihre Weiterleite-Adressen in einer internen Tabelle zu verwalten.

In der FIG 7 oben ist die lokale Generierung der SDA durch einen mit der Bezugsziffer 6 versehenen Pfeil, der von einem mit SDA? bezeichneten Blockelement zu einem mit SDA bezeichneten einfach schraffierten Blockelement weist, angedeutet. Die Schraffur soll andeuten, dass die SDA lokal von dem Talker T generiert wurde.

Nachdem die SDA lokal von dem Talker T aus der Stream-ID SID generiert wurde, wird überprüft, ob die erhaltene Adresse im Netzwerk bereits genutzt wird. Dies erfolgt bei dem beschriebenen Ausführungsbeispiel über die Registrierung der SDA, etwa durch MMRP (Multiple MAC Registration Protocol) durch die lokale Prüfung einer bereits vorhandenen Eintragung der Adresse, ausgelöst durch eine zuvor erfolgte Bekanntgabe derer durch ein anderes Gerät. Nach erfolgter Prüfung erfolgt die Bekanntgabe im Netzwerk und eine damit verbundene Eintragung in alle anderen Netzwerkkomponenten.

Die Registrierung ist in der FIG 7 durch einen mit der Bezugsziffer 7 versehenen Pfeil angedeutet. Der mit der Bezugsziffer 8 versehene gepunktete Pfeil deutet an, dass eine Registrierung von einer anderen Netzwerkkomponente im Netzwerk erhalten wurde. Dies kennzeichnet die mehrfache Verwendung der Adresse bzw. den mehrfachen Registrierungsversuch. Die ggf. erneute Registrierung ist in FIG 7 durch einen weiteren mit der Bezugsziffer 7 versehenen Pfeil angedeutet - diese ist notwendig, um im Netzwerk eine eindeutige SDA zu finden.

Für den Fall, dass die lokal vom Talker T aus der Stream-ID SID generierte SDA bereits in Benutzung ist, wird diese verändert, konkret wenigstens ein Teil in dieser invertiert, z. B. ein Byte. Die Veränderung und erneute Überprüfung erfolgt so oft, bis eine noch nicht in Benutzung befindliche Adresse erhalten wird. Dabei kann ein konstanter Operator verwendet werden, etwa ein solcher, der bewirkt, dass das 1., 2., 3., ..., n-te Byte bei der 1., 2.,. 3., ..., n-ten wiederholten Versuch invertiert wird. In der FIG 7 ist durch "0...n:" angedeutet, dass die Veränderung und wiederholte Überprüfung 0 bis n mal erfolgen kann.

Nachdem eine gültige SDA (direkt beim ersten Mal oder nach einer 1-, 2- ..., n-fachen Veränderung und neuen Überprüfung) erhalten wurde, sendet der Talker T die Talker Advertise Nachricht A mit der Stream-ID SID und der lokal generierten Stream-DA SDA (siehe FIG 4) und diese wird im Netzwerk verteilt.

Es sei angemerkt, dass alternativ oder zusätzlich dazu, dass die Überprüfung auf Kollisionen über die Registrierung der Adressen SDA vor der Reservierung erfolgt, dies auch unter Verwendung eines Reservierungsprotokolls, etwa SRP möglich ist. Dann wird eine lokal generierter Weiterleite-Kenner SDA bevorzugt ohne Überprüfung vom Talker über eine diesen enthaltende Ankündigungsnachricht A bekannt gegeben und für den Fall, dass eine Kollision gegeben ist, wird eine neue lokale Generierung einer Adresse angestoßen.

Umfasst das Netzwerk einen oder mehrere Router 5 (siehe Figuren 5-7), wird auch von dem oder den Routern 5 lokal ein Weiterleite-Kenner in Form einer Stream Destination MAC Adresse SDA2 (Siehe FIG 6) aus der Stream-ID SID unter Verwendung einer Hash-Funktion lokal generiert, wie unter Bezugnahme auf FIG 8 vorstehend im Zusammenhang mit der lokalen SDA-Generierung durch den Talker T beschrieben.

Dann ist weiterhin zweckmäßiger Weise vorgesehen, dass von dem Router 5, der im zweiten, in FIG 6 rechten Layer2-Subnetz quasi einen Talker T1 bildet, eine Talker Advertise Nachricht A mit der von ihm lokal generierten SDA2 und der Stream-ID gesendet und diese im Netzwerk 1 verteilt wird. Es sei angemerkt, dass die vom Talker T lokal generierte Stream Destination MAC Adresse SDA und die vom Router 5 lokal generierte Stream Destination MAC Adresse SDA2 gleich sein können jedoch nicht müssen.

Sofern noch weitere Router 5 vorhanden sind, gilt bevorzugt auch für diese, dass sie lokal eine Stream Destination MAC Adresse für die geschützte Verbindung V generieren und bevorzugt eine Ankündigungsnachricht A senden, welche diese umfasst.

Weiterhin gilt, wenn einer oder mehrere Router 5 vorhanden sind bevorzugt, dass der oder wenigstens ein Router 5 den von ihm lokal generierten Weiterleite-Kenner SDA2 Datenpakten, die er aus dem einen Subnetz (FIG 6 links) empfängt und in das andere Subnetz (FIG 6 rechts) weiterleitet, hinzufügt.

Aufgrund der erfindungsgemäß vorgesehenen lokalen Weiterleite-Kenner-Generierung kann auf ein Protokoll zur Konfigurierung der Adressen (siehe FIG 5) verzichtet werden. Dies ist ganz besonders bei der Verwendung von Routern 5 zur Übertragung von Echtzeitdaten hilfreich, da in Routern ein neuer Weiterleite-Kenner, etwa eine neue SDA für die Streamdaten benötigt wird und so auf ein Konfiguration verzichtet werden kann. Die Layer2-Konfiguration ist somit auch unabhängig von dem Layer 3-Weg im Netzwerk 1, da nicht an jedem Router 5 für jeden Stream V eine SDA konfiguriert werden muss.

Es sei angemerkt, dass sowohl die den Talker T bildende Steuerung als auch der Router 5 Ausführungsbeispiele erfindungsgemäße Geräte darstellen, die zur Durchführung der hier beschriebenen Ausführungsbeispiele des erfindungsgemäßen Verfahrens ausgebildet und/oder eingerichtet sind.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Datenübertragung in einem insbesondere industriellen Netzwerk (1), bei dem wenigstens eine geschützte Verbindung (V) für die Übertragung von Datenpaketen zwischen einem Stream-Initiator (T) und wenigstens einem Stream-Teilnehmer (L) eingerichtet wird, wobei ein Weiterleite-Kenner (SDA, SDA2), anhand dem die Weiterleitung von Datenpaketen über die wenigstens eine geschützte Verbindung (V) zu erfolgen hat, bereitzustellen ist, oder mehrere Weiterleite-Kenner (SDA), anhand derer jeweils die Weiterleitung von Datenpaketen über eine Teilstrecke der wenigstens einen geschützten Verbindung (V) zu erfolgen hat, bereitzustellen sind,
**dadurch gekennzeichnet, dass** der oder wenigstens einer der Weiterleite-Kenner (SDA, SDA2) lokal von dem Stream-Initiator (T) und/oder lokal von einem Router (5) des Netzwerkes (1) generiert wird.

2. Verfahren nach Anspruch 1,
**dadurch gekennzeichnet, dass** der oder wenigstens einer der Weiterleite-Kenner (SDA, SDA2) unter Rückgriff auf einen der geschützten Verbindung (V) zugeordneten eindeutigen Verbindungs-Kenner (SID) generiert wird, insbesondere, indem mittels einer Hashfunktion ein Hash-Wert aus dem Verbindungs-Kenner (SID) berechnet und dieser bevorzugt um eines oder mehrere Bits, insbesondere um eine vorgegebene Bitfolge (KA) erweitert wird.

3. Verfahren nach Anspruch 1 oder 2,
**dadurch gekennzeichnet, dass** der oder wenigstens einer der Weiterleite-Kenner (SDA, SDA2) unter Rückgriff auf einen dem Stream-Initiator (T) oder dem Router (5) zugeordneten eindeutigen Geräte-Kenner (MAC) generiert wird, insbesondere, indem mittels einer Hashfunktion ein Hash-Wert aus dem Geräte-Kenner (MAC) oder aus einer Bitfolge, die den Geräte-Kenner (MAC) und eines oder mehrere weitere Bits umfasst, berechnet und dieser bevorzugt um eines oder mehrere Bits, insbesondere um eine vorgegebene Bitfolge (KA) erweitert wird.

4. Verfahren nach Anspruch 2 oder 3,
**dadurch gekennzeichnet, dass** als Hashfunktion eine Funktion oder ein Algorithmus für eine zyklische Redundanzprüfung oder ein Message-Digest-Algorithmus oder ein Secure-Hash-Algorithmus oder der Adler-32-Algortihmus oder der Fletcher-Algorithmus verwendet wird.

5. Verfahren nach einem der Ansprüche 2 bis 4,
**dadurch gekennzeichnet, dass** der geschützten Verbindung (V) als Verbindungs-Kenner (SID) die gegebenenfalls um eines oder mehrere Bits erweiterte MAC-Adresse des Stream-Initiators zugeordnet ist oder wird.

6. Verfahren nach einem der vorhergehenden Ansprüche,
**dadurch gekennzeichnet, dass** sich die wenigstens eine geschützte Verbindung (V) über zwei oder mehr Subnetze (S1, S2) des Netzwerkes (1), die oder von denen jeweils zwei über einen Router (5) verbunden sind, erstreckt, und von dem oder wenigstens einem der zwei Subnetze (S1, S2) verbindenden Router (5) der oder wenigstens einer der Weiterleite-Kenner (SDA, SDA2) lokal generiert wird, und dieser bevorzugt für die Übertragung der Datenpakete über eine sich an den Router (5) anschließende Teilstrecke der wenigstens einen geschützten Verbindung (V) verwendet wird.

7. Verfahren nach Anspruch 6,
**dadurch gekennzeichnet, dass** der oder wenigstens einer der zwei Subnetze (S1, S2) verbindenden Router (5) den von ihm lokal generierten Weiterleite-Kenner (SDA, SDA2) Datenpakten, die er aus dem einen Subnetz (S1) empfängt und in das andere Subnetz (S2) weiterleitet, hinzufügt.

8. Verfahren nach einem der vorhergehenden Ansprüche,
**dadurch gekennzeichnet, dass** im Anschluss an die lokale Generierung des oder des wenigstens einen Weiterleite-Kenners (SDA, SDA2) überprüft wird, ob dieser in dem Netzwerk (1) oder zumindest einem Subnetz (S1, S2) dieses noch nicht verwendet wird, und für den Fall, dass er bereits verwendet wird, ein Teil, insbesondere wenigstens ein Byte des lokal generierten Weiterleite-Kenners (SAD, SAD2) verändert und die Überprüfung wiederholt wird.

9. Gerät (T, 5) zur Durchführung des Verfahrens nach einem der vorhergehenden Ansprüche, das dazu ausgebildet ist, wenigstens einen Weiterleite-Kenner (SDA, SDA2), anhand dem die Weiterleitung von Datenpaketen zumindest über eine Teilstrecke der wenigstens einen geschützten Verbindung (V) zu erfolgen hat, lokal zu genieren.

10. Gerät (T, 5) nach Anspruch 9,
**dadurch gekennzeichnet, dass** das Gerät (T, 5) dazu ausgebildet und/oder eingerichtet ist, den wenigstens einen Weiterleite-Kenner (SAD, SAD2) unter Rückgriff auf einen der geschützten Verbindung (V) zugeordneten eindeutigen Verbindungs-Kenner (SID) zu generieren, insbesondere, indem mittels einer Hashfunktion ein Hash-Wert (HW) aus dem Verbindungs-Kenner (SID) berechnet und dieser bevorzugt um eines oder mehrere Bits erweitert wird.

11. Gerät (T, 5) nach Anspruch 10,
**dadurch gekennzeichnet, dass** das Gerät (T, 5) dazu ausgebildet und/oder eingerichtet ist, den wenigstens einen Weiterleite-Kenner (SAD, SAD2) unter Rückgriff auf einen dem Stream-Initiator (T) oder dem Router (5) zugeordneten eindeutigen Geräte-Kenner (MAC) zu generieren, insbesondere, indem mittels einer Hashfunktion ein Hash-Wert (HW) aus dem Geräte-Kenner (MAC) oder aus einer Bitfolge, die den Geräte-Kenner (MAX) und eines oder mehrere weitere Bits umfasst, berechnet und dieser bevorzugt um eines oder mehrere Bits erweitert wird.

12. Gerät (T, 5) nach Anspruch 10 oder 11,
**dadurch gekennzeichnet, dass** das Gerät (T, 5) dazu ausgebildet und/oder eingerichtet ist, als Hashfunktion eine Funktion oder einen Algorithmus für eine zyklische Redundanzprüfung, insbesondere den CRC32-Algorithmus, oder einen Message-Digest-Algorithmus oder einen Secure-Hash-Algorithmus oder den Adler-32-Algortihmus oder den Fletcher-Algorithmus zu verwenden.

13. Gerät (T, 5) nach einem der Ansprüche 9 bis 12,
**dadurch gekennzeichnet, dass** das Gerät (T, 5) dazu ausgebildet und/oder eingerichtet ist, einen von ihm lokal generierten Weiterleite-Kenner (SDA, SDA2) empfangenen Datenpakten hinzuzufügen und diese mit dem Weiterleite-Kenner (SDA, SDa2) weiterzuleiten.

14. Gerät (T, 5) nach einem der Ansprüche 9 bis 13,
**dadurch gekennzeichnet, dass** das Gerät (T, 5) dazu ausgebildet und/oder eingerichtet ist, im Anschluss an die lokale Generierung des wenigstens einen Weiterleite-Kenners (SDA, SDA2) zu überprüfen, ob dieser in dem Netzwerk (1) oder zumindest einem Subnetz (S1, S2) dieses noch nicht verwendet wird und für den Fall, dass er bereits verwendet wird, wenigstens ein Bit des generierten Weiterleite-Kenners (SDA, SDA2) zu verändern und die Überprüfung zu wiederholen.

15. Computerprogramm umfassend Programmcode-Mittel zur Durchführung des Verfahrens nach einem der Ansprüche 1 bis 8.

16. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 8 durchzuführen.
